# EUROPÄISCHE PATENTSCHRIFT

(11) **EP 1 062 275 B1**
(45) Veröffentlichungstag und Bekanntmachung des Hinweises auf die Patenterteilung: **02.06.2004**
(21) Anmeldenummer: 99913216.0
(22) Anmeldetag: 03.03.1999
(51) Int. Cl.: C08L 53/02, C08L 25/06

(54) **POLYMERMISCHUNGEN AUS STYROLPOLYMEREN**
POLYMER MIXTURES COMPRISED OF STYRENE POLYMERS
MELANGES POLYMERES CONSTITUES DE POLYMERES DE STYRENE

(30) Priorität: 10.03.1998 DE 19810141
(43) Veröffentlichungstag der Anmeldung: 27.12.2000
(73) Patentinhaber: BASF AKTIENGESELLSCHAFT, 67056 Ludwigshafen (DE)
(72) Erfinder: KNOLL, Konrad, D-67069 Ludwigshafen (DE); NIESSNER, Norbert, D-67159 Friedelsheim (DE); WÜNSCH, Josef, D-67105 Schifferstadt (DE); GAUSEPOHL, Hermann, D-67112 Mutterstadt (DE)
(86) Internationale Anmeldenummer: PCT/EP1999/001364
(87) Internationale Veröffentlichungsnummer: WO 1999/046330

(56) Entgegenhaltungen:
- WO-A-96/20248

## Beschreibung

Die Erfindung betrifft Polymermischungen, enthaltend
P1) 1 - 85 Gew.-% eines gummielastischen Blockcopolymeren, das aus Hartblöcken S aus vinylaromatischen Monomeren und statistischen Weichblöcken B/S aus Dienen und vinylaromatischen Monomeren aufgebaut ist und mindestens die Blockstruktur S-B/S-S enthält, wobei der Diengehalt, weniger als 50 Gewichtsprozent und der Anteil der aus den Blöcken B/S gebildeten Weichphase mindestens 60 Gewichtsprozent beträgt, jeweils bezogen auf das gesamte Blockcopolymere,
P2) 5 - 89 Gew.-% eines von P1) verschiedenen Blockcopolymeren aus vinylaromatischen Monomeren und Dienen,
P3) 10 - 94 Gew.-% glaskaren oder schlagzähen Polystyrols oder Mischungen davon und
P4) 0 - 84 Gew.-% weiterer Zusatzstoffe,
wobei die Summe der Komponenten P1 bis P4) 100% ergibt.

Weiterhin betrifft die Erfindung die Verwendung der Polymermischungen zur Herstellung von Fasern, Folien und Formkörpern, sowie die daraus erhältlichen Fasern, Folien und Formkörper.

Die WO 96/20248 beschreibt schlagzähe, thermoplastisch verarbeitbare Mischungen aus Elastomeren und Thermoplasten. Als Elastomere können Styrol-Butadien-Blockcopolymere mit einem elastischen Weichblock B/S mit statistischer Styrol-Butadien-Abfolge und Hartblöcken S aus Styrol verwendet werden. Diese Blockcopolymeren werden in Thermoplasten zur Schlagzähmodifizierung eingesetzt. Als Thermoplasten werden unter anderem auch glasklares oder schlagzähes Polystyrol oder Styrol-Butadien-Blockcopolymere genannt. Diese zeigen verbesserte mechanische Eigenschaften und geringe Schwindung der Formkörper bei der Verarbeitung. Die Verwendung solcher Polymermischungen zur Herstellung flexibler, tranparenter Folien sind in WO 96/23823 beschrieben.

Durch den Zusatz von Butadienkautschuken oder Styrol-Butadien-Blockcopolymeren kann die Zähigkeit von Thermoplasten erhöht werden. In der Regel ist damit aber auch eine Verringerung der Steifigkeit verbunden. Hohe Butadienanteile in den zur Schlagzähmodifizierung eingesetzten Polymeren können zudem die Wärmeformbeständigkeit und Witterungsbeständigkeit herabsetzen. Auch verteuern hohe Anteile an Kautschuken oder Blockcopolymeren die entsprechenden thermoplastischen Formmassen.

Aufgabe der vorliegenden Erfindung war es, leicht verarbeitbare Polymermischungen bereitzustellen, deren Steifigkeit in weiten Bereichen bei gleichzeitig hoher Reißfestigkeit eingestellt werden kann. Die Polymermischungen sollten auch gegenüber herkömmlichen Polystyrolmischungen bei gleicher Reißdehnung einen möglichst geringen Anteil an butadienhaltigen Polymeren aufweisen.

Demgemäß wurden die eingangs genannten Polymermischungen gefunden.

Als Komponente P1) enthalten die erfindungsgemäßen Polymermischungen 1 bis 85, bevorzugt 2 bis 62, besonders bevorzugt 5 bis 35 Gew.-% eines gummielastischen Blockcopolymeren, das aus Hartblöcken S aus vinylaromatischen Monomeren und statistischen Weichblöcken B/S aus Dienen und vinylaromatischen Monomeren aufgebaut ist und mindestens die Blockstruktur S-B/S-S enthält, wobei der Diengehalt, weniger als 50 Gewichtsprozent und der Anteil der aus den Blöcken B/S gebildeten Weichphase mindestens 60 Gewichtsprozent beträgt, jeweils bezogen auf das gesamte Blockcopolymere.

Die Blockcopolymeren P1) sind dadurch ausgezeichnet, daß man in einem Vinylaromat-Dien-Blockcopolymer aus Blöcken, die eine Hartphase (Blocktyp S) und solchen, die eine weichphase bilden, an die Stelle eines reinen Polydienblocks als Weichphase einen Block B/S aus Dien- und Vinylaromaten-Einheiten treten läßt, der statistischen Aufbau besitzt. Der Aufbau kann dabei entlang der Kette im statistischen Mittel homogen oder inhomogen sein.

Man erhält ein solches erfindungsgemäßes gummielastisches Blockcopolymer dadurch, daß im Rahmen der vorstehenden Parameter die Weichphase aus einem statistischen Copolymeren eines Vinylaromaten mit einem Dien gebildet wird; statistische Copolymer von Vinylaromaten und Dienen erhält man durch Polymerisation in Gegenwart eines polaren Cosolvens oder eines Kaliumsalzes.

Durch den statischen Einbau der vinylaromatischen Verbindungen in den Weichblock des Blockcopolymeren und die Verwendung von Lewis-Basen während der Polymerisation wird die Glasübergangstemperatur (Tg) beeinflußt. Die Glasübergangstemperatur des Weichblockes B/S beträgt vorzugsweise -50 bis +25°C, bevorzugt -50 bis +5°C, besonders bevorzugt -50 bis -15°C.

Die Glastemperatur des Hartblockes S liegt bevorzugt über 25°C, besonders bevorzugt über 50°C.

Das Molekulargewicht eines Blocks S beträgt vorzugsweise 1000 bis 200.000, insbesondere 5.000 bis 50.000 [g/mol]. Ganz besonders bevorzugt beträgt das Molekulargewicht eines Blockes S 10.000 bis 20.000 g/mol. Innerhalb eines Moleküls können S-Blöcke unterschiedliche Molmasse haben.

Das Molekulargewicht des Blocks B/S beträgt üblicherweise von 2.000 bis 250.000 [g/mol]; bevorzugt sind Werte von 20.000 bis 150.000 [g/mol].

Auch Block B/S kann wie Block S innerhalb eines Moleküls unterschiedliche Molekulargewichtswerte einnehmen.

Bevorzugte Polymerstrukturen sind S-B/S-S, X-[-B/S-S]₂ und Y-[-B/S-S]₂, wobei X den Rest eines bifunktionellen Kopplungsmittels und Y den Rest eines bifunktionellen Initiators bedeuten. Der statistische Block B/S selbst kann wieder in Blöcke (B/S)₁-(B/S)₂-(B₃/S)₃-... unterteilt sein kann. Bevorzugt besteht der statistische Block aus 2 bis 15 statistischen Teilblöcken, besonders bevorzugt aus 3 bis 10 Teilblöcken. Die Aufteilung des statistischen Blocks B/S in möglichst viele Teilblöcke (B/S)ₙ bietet den entscheidenden Vorteil, daß auch bei einem Zusammensetzungsgradienten innerhalb eines Teilblocks (B/S)ₙ, wie er sich in der anionischen Polymerisation unter praktischen Bedingungen nur schwer vermeiden läßt (s.u.), sich der B/S-Block insgesamt wie ein nahezu perfektes statistisches Polymer verhält. Es bietet sich deshalb an, weniger als die theoretische Menge an Lewis-Base zuzusetzen, was den Anteil 1,4-Dienverknüpfungen erhöht, die Glastemperatur Tg absenkt und die Vernetzungsanfälligkeit des Polymeren mindert.

Bevorzugt ist ein Blockcopolymer einer der allgemeinen Formeln S-B/S-S,
wobei
- S: für einen vinylaromatischen Block,
- B/S: für die Weichphase aus einem statistisch aus Dien- und vinylaromatischen Einheiten aufgebauten Block steht.

Die Weichphase kann in Blöcke (B/S)₁-(B/S)₂ unterteilt sein,
wobei die Indices 1,2 für unterschiedliche Strukturen in dem Sinne stehen, daß das Vinylaromat/Dien-Verhältnis in den einzelnen Blöcken B/S unterschiedlich ist oder sich innerhalb eines Blocks in den Grenzen (B/S)₁(B/S)₂ kontinuierlich ändert, wobei die Glasübergangstemperatur T_{g} jedes Teilblocks unter 25°C liegt.

Besonders bevorzugt ist ein Weichblock B/S, der in mehrere Blöcke (B/S)ₙ gleicher Zusammensetzung unterteilt ist.

Ein Blockcopolymer, das mehrere Blöcke B/S und/oder S mit unterschiedlicher Molmasse je Molekül aufweist, ist ebenfalls bevorzugt.

Bevorzugt als vinylaromatische Verbindung im Sinne der Erfindung ist Styrol und ferner α-Methylstyrol und Vinyltoluol sowie Mischungen dieser Verbindungen. Bevorzugte Diene sind Butadien und Isopren, ferner Piperylen, 1-Phenylbutadien sowie Mischungen dieser Verbindungen.

Eine besonders bevorzugte Monomerkombination ist Butadien und Styrol. Alle nachstehenden Gewichts- und Volumenangaben beziehen sich auf diese Kombination; bei Verwendung der technischen Äquivalente von Styrol und Butadien muß man ggf. die Angaben entsprechend umrechnen.

Vorzugsweise besteht der Weichblock B/S aus 75 - 30 Gew.-% Styrol und 25 - 70 Gew.-% Butadien. Besonders bevorzugt hat ein Weichblock B/S einen Butadienanteil zwischen 35 und 70 % und einen Styrolanteil zwischen 65 und 30 %.

Der Gewichtsanteil des Diens im gesamten Blockcopolymer liegt im Falle der Monomerkombination Styrol/ Butadien bei 15 - 50 Gew.-%, derjenige der vinylaromatischen Komponente entsprechend bei 85 - 50 Gew.-%. Besonders bevorzugt sind Butadien-Styrol-Blockcopolymere mit einer Monomerzusammensetzung aus 25 - 40 Gew.% Dien und 75 - 60 Gew.% an vinylaromatischer Verbindung.

Die Blockcopolymeren P1) sind durch anionische Polymerisation in einem unpolaren Lösungsmittel unter Zusatz eines polaren Cosolvens oder eines Kaliumsalzes erhältlich, wie beispielsweise in WO 96/20248 bzw. WO 97/4007 beschrieben.

Erfindungsgemäß liegt der Gewichtsanteil der aus Dien- und vinylaromatischen Sequenzen aufgebauten weichphase bei 60 - 95, bevorzugt bei 60 - 80 und besonders bevorzugt bei 65 - 75 Gew.-%. Die aus den vinylaromatischen Monomeren entstandenen Blöcke S bilden die Hartphase, deren Gewichtsanteil entsprechend 5 - 40, bevorzugt 20 - 40 und besonders bevorzugt 25 - 35 Gew.-% ausmacht.

Die Blockcopolymeren besitzen ein dem Weich-PVC sehr ähnliches Eigenschaftsspektrum, können jedoch vollkommen frei von migrationsfähigen, niedermolekularen Weichmachern hergestellt werden.
Sie zeichnen sich durch eine hohe Sauerstoffpermeation P_{O} und Wasserdampfpermeation P_{W} von über 2.000 [cm³·100 µm/m²·d·bar] bzw. über 10 [g 100 µm/m²·d·bar] aus, wobei P_{O} die Sauerstoffmenge in cm³ bzw. P_{W} die Wasserdampfmenge in Gramm angibt, die durch 1 m² Folie mit einer Normdicke von 100 µm je Tag und je bar Partialdruckdifferenz hindurchtreten.

Als Komponente P2) enthalten die erfindungsgemäßen Polymermischungen 5 bis 89, bevorzugt 18 bis 78, besonders bevorzugt 25 bis 55 Gew.-% eines von P1) verschiedenen Blockcopolymeren aus vinylaromatischen Monomeren und Dienen.

Das Blockcopolymer P2) ist beispielsweise von P1) verschieden, wenn es eine Reißdehnung größer 100 % und einen E-Modul größer 100 MPa aufweist.

Bevorzugt werden als Komponente P2) zähe und steife Styrol-Butadien-Blockcopolymere mit einem Butadiengehalt im Bereich von 5 bis 40 Gew.-%, insbesondere 10 bis 30 Gew.-% Butadien und 60 bis 95 Gew.-%, insbesondere 70 bis 90 Gew.-% Styrol, bezogen auf das gesamte Blockcopolymer P2). Als Blockcopolymer P2) wird insbesondere ein nicht elastomeres, sternförmig verzweigtes Blockcopolymer bevorzugt. Desweiteren wird als Komponente P2) bevorzugt ein Blockcopolymer mit entständigen Hartblöcken S aus vinylaromatischen Monomeren verwendet.

Das Molekulargewicht der Blockcopolymeren P2) liegt in der Regel im Bereich von 100 000 bis 1 000 000 und beträgt vorzugsweise 150 000 bis 500 000. Sie können linear oder verzweigt sein und werden nach den üblichen Methoden der sequentiellen anionischen Polymerisation erhalten. Die Herstellung von verzweigten Blockcopolymeren, die sich als Komponente P2) eignen ist z. B. in EP-A-0 046 862 beschrieben.

Beispielsweise eignen sich auch die linearen oder sternförmigen Styrol-Butadien-Blockcopolymeren, wie sie unter der Bezeichnung Styrolux®(BASF), K-Resin® (Phillips Petroleum) oder Finaclear® (Fina) im Handel erhältlich sind.

Als Komponente P3) können die erfindungsgemäßen Polymermischungen 10 bis 94, bevorzugt 20 bis 80, besonders bevorzugt 40 bis 70 Gew.-% eines glaskaren oder schlagzähen Polystyrols oder Mischungen davon enthalten.

Erfindungsgemäße schlagfeste Polystyrole und Standard-Polystyrole, deren Herstellung, Struktur und Eigenschaften sind in der Übersichtsliteratur (A. Echte, F.Haaf, J.Hambrecht in Angew. Chem. (Int.Ed.Engl.) 20, 344-361, (1981); sowie Kunststoffhandbuch, Band 4, Polystyrol, Carl Hanser Verlag (1996) eingehend beschrieben. Darüber hinaus können die verwendeten schlagzähen Polystyrole durch die Verwendung spezieller Polybutadien-Kautschuke z.B. mit gegenüber herkömmlichen Kautschuken veränderten 1,4-cis- bzw. 1,4-trans-Anteil oder 1,2 und 1,4-Verknüpfungsanteil strukturell verändert sein. Ferner können anstelle von Polybutadienkautschuk auch andere Dienkautschuke sowie Elastomere von der Art des Ethylen-Propylen-Dien-Copolymer (EPDM-Kautschuk) sowie hydrierte Dienkautschuke eingesetzt werden. Geeignetes Standard-Polystyrol wird nach dem Verfahren der anionischen bzw. radikalischen Polymerisation hergestellt. Die durch das Polymerisationsverfahren beeinflußbare Uneinheitlichkeit des Polymerisats ist dabei von untergeordneter Bedeutung. Bevorzugt werden Standard-Polystyrol und schlagzähes Polystyrol, deren toluollöslicher Anteil ein mittleres Molekulargewicht M_{w} von 50.000 bis 500.000 g/mol aufweist und die gegebenenfalls noch mit Additiven, wie beispielsweise Mineralöl, Stabilisator, Antistatika, Flammschutzmittel oder Wachsen ausgerüstet sind.

Als Komponente P4) können die erfindungsgemäßen Polymermischungen 0 bis 84, bevorzugt 0 bis 60, besonders bevorzugt 0 bis 30 Gew.-% weiterer Zusatzstoffe enthalten.

Als Komponente P4) können die erfindungsgemäßen Polymermischungen weitere Zusatzstoffe, wie Verarbeitungshilfsmittel, Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, faser- und pulverförmige Füll- und Verstärkungsmittel, Keimbildungsmittel, Weichmacher usw. enthalten, deren Anteil in der Regel nicht mehr als 70 Gew.-% bevorzugt nicht mehr als 40 Gew.-% beträgt.

Als Beispiele für Oxidationsverzögerer und Wärmestabilisatoren sind Halogenide von Metallen der Gruppe I des periodischen Systems, z.B. Natrium-, Kalium- und/oder Lithiumhalogenide, ggf. in Verbindung mit Kupfer-(I)-Halogeniden, z.B. Chloriden, Bromiden, Jodiden, sterisch gehinderte Phenole, Hydrochinone, verschiedene substituierte Vertreter dieser Gruppen und deren Mischungen in Konzentrationen bis zu 1 Gew.-%, bezogen auf das Gewicht der thermoplastischen Formmasse genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Weiterhin können organische Farbstoffe wie Nigrosin, Pigmente wie Titandioxid, Cadmiumsulfid, Cadmiumselenid, Phthalocyanine, Ultramarinblau und Ruß als Farbstoffe zugesetzt werden, sowie faser- und pulverförmige Füllstoffe und Verstärkungsmittel. Beispiele für letztere sind Kohlenstoffasern , Glasfasern, amorphe Kieselsäure, Asbest, Calciumsilicat. (Wollastonit), Aluminiumsilicat, Magnesiumcarbonat, Kaolin, Kreide, gepulverter Quarz, Glimmer und Feldspat. Der Anteil derartiger Füll- und Farbstoffe beträgt im allgemeinen bis zu 50 Gew.-%, bevorzugt bis zu 35 Gew.-%.

Als Keimbildungsmittel können z.B. Talkum, Calciumfluorid, Natriumphenylphosphinat, Aluminiumoxid, Siliciumdioxid und Nylon 22 eingesetzt werden.'

Gleit- und Entformungsmittel, welche in der Regel in Mengen bis zu 1 Gew.-% eingesetzt werden können, sind z.B. langkettige Fettsäuren wie Stearinsäure oder Behensäure, deren Salze (z.B. Caoder Zn-Stearat) oder Ester (z.B. Stearylstearat oder Pentaerythrittetrastearat) sowie Amidderivate (z.B. Ethylenbisstearylamid). Zur besseren Folienverarbeitung können in Mengen bis zu 0,1 Gew.-% Antiblockmittel auf mineralischer Basis den erfindungsgemäßen Formmassen zugesetzt werden. Als Beispiele seien amorphe oder kristalline Kieselsäure, Calciumcarbonat oder Aluminiumsilikat genannt.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid und o- und p-Tolylethylsulfonamid genannt.

Zur weiteren Verbesserung der Schwerentflammbarkeit können alle für die jeweiligen Thermoplaste bekannten Flammschutzmittel zugegeben werden, insbesondere solche auf Basis von Phosphorverbindungen bzw. roter Phosphor selbst.

Die Herstellung der erfindungsgemäßen Formmassen kann nach an sich bekannten Verfahren erfolgen. Nach einer bevorzugten Ausführungsform erfolgt die Herstellung durch Zugabe der Komponente P₁) sowie gegebenenfalls P₃), zur Schmelze der Komponente P₂).

Zweckmäßigerweise verwendet man hierzu Extruder, z.B. Einschnekken- oder Zweischneckenextruder oder andere herkömmliche Plastifizierungsvorrichtungen wie Brabender-Mühlen oder Banbury-Mühlen.

Die erfindungsgemäßen Polymermischungen zeichnen sich durch gute mechanische Eigenschaften (Steifigkeit, Zähigkeit) und gute Wärmeformbeständigkeit aus.

Demzufolge eignen sie sich zur Herstellung von Formteilen und Halbzeugen jeglicher Art wie Walzfelle, Faltenbälgen, Gummibälgen, Matten, Decken, Fußbodenbelägen, Schuhsohlen, Teppichbodenrückseiten, Kunstleder, Blasformkörper, Profilextrudate, Spritzgußformkörper, Rohrextrudate sowie drei-dimensionale Blasformkörper.

Überraschend wurde gefunden, daß Polymermischungen aus P1) und P2) in jedem Mischungsverhältnis transparent sind, obwohl ein dreiphasiges System vorliegt. Die Streckspannung dieser Polymermischungen steigt linear mit dem Anteil an P2) an. Dies ermöglicht beispielsweise die Einstellung von Härte, Zähigkeit und Flexibilität von Filmen oder anderen Anwendungen, wie Spritzgußteilen.

Polymermischungen aus P1), P2) und P3) können je nach Zusammensetzung das Eigenschaftsspektrum von transparentem, schlagzähem Polystyrol bis hin zu thermoplastischen Elastomeren (TPE) abdekken. Sie eigenen sich insbesondere für transparente Folien.

Die erfindungsgemäßen Polymermischungen mit schlagzähem Polystyrol (HIPS) als Komponente P3) zeigen eine höhere Spannungsrißbeständigkeit gegenüber dem reinen schlagzähen Polystyrol.

### Beispiele

### Komponente P1

Die Herstellung der Komponenten P 1 erfolgte gemäß DE-A 44 20 952:

Ein beheiz- und kühlbarer 50 1-Edelstahlreaktor, der mit einem Kreuzbalkenrührer ausgerüstet war, wurde durch Spülen mit Stickstoff, auskochen mit einer Lösung von sec-Butyllithium und 1,1-Diphenylethylen in Cyclohexan (Molverhältnis 1:1) und trocknen vorbereitet.

Anschließend wurden 22,8 l Cyclohexan eingefüllt und 42 ml s-Butyllithium als Initiator, 65,8 ml Tetrahydrofuran und Styrol (S) und Butadien (3) in den in der nachstehenden Tabelle 1 angegebenen Mengen (g) und nach dem angegebenen Zeittaktprogramm zugesetzt . Angegeben ist auch die Polymerisationsdauer t in Minuten sowie Anfangs- und Endtemperatur T_{A} bzw. T_{E} (in °C), wobei darauf hinzuweisen ist, daß die Polymerisationsdauer stets groß gegen die Dauer des Monomerzulaufs war.

Die Temperatur des Reaktionsgemisches wurde durch Heizung oder Kühlung des Reaktormantels gesteuert. Nach Umsetzungsende (Verbrauch der Monomeren) wurde mit Ethanol, bis zur Farblosigkeit titriert und die Mischung mit einem 1,5-fachen Überschuß an Ameisensäure sauer gestellt. Zuletzt wurden 34 g eines handelsüblichen Stabilisators 2-t-butyl-6-(3-t-butyl-2-hydroxy-5-methylbenzyl)-4-methylphenylacrylat (Irganox® 3052; Ciba-Geigy, Basel) und 82 g Trisnonylphenylphosphit zugesetzt.

Die Lösung wurde auf einem Entgasungsextruder (drei Dome, Vorwärts- und Rückwärtsentgasung) bei 200°C aufgearbeitet und granuliert. Das Granulat wurde in einem Fluidmischer mit 10 g Bisstearylamid (Acrawax) als Außenschmierung versetzt.

Das Blockcopolymer besaß eine Schmelzevolumenrate MVR (200°C/5 kg) von 12 cm³/10 min.

**Tabelle 1**

| | Komponente P1 |
|---|---|
| THF (ml) | 65,8 |
| s-BuLi (ml) | 42 |
| Styrol 1 (g) | 1245 |
| T(A)/T(E) (°C) | 30/75 |
| Zeic (min) | 30 |
| Butadien 1 (g) | 1101 |
| Styrol 2 (g) | 1323 |
| T(A)/T(E) (°C) | 56/73 |
| Zeit (min) | 19 |
| Butadien 2 (g) | 1101 |
| Styrol 3 (g) | 1323 |
| T(A)/T(E) (°C) | 52/76 |
| Zeit (min) | 22 |
| Butadien 3 (g) | 1101 |
| Styrol 4 (g) | 1323 |
| T (A)/T(E) (°C) | 54/73 |
| Zeit (min) | 19 |
| Styrol 5 (g) | 1245 |
| T(A)/T(E) (°C) | 60/64 |
| Zeit (min) | 45 |
| Mₙ (g/mol) * | 117 000 |
| Mₚ (g/mol) * | 153 000 |
| M_{w} (g/mol) * | 169 000 |

| | |
|---|---|
| * Die Molekulargewichte wurden mittels Gelpermeationschromatographie und Polystyrolstandard ermittelt (Mₚ = Molmasse am Peakmaximum). | |

### Komponente P2-1)

Styrol-Butadien-Blockcopolymer mit einer Schmelzevolumenrate MVR (200°C/5kg) von 14 cm³/10 min und einem Zug-E-modul von 1300 MPa (Styrolux® 693 D der Fa. BASF) .

### Komponente P2-2)

Styrol-Butadien-Blockcopolymer mit einer Schmelzvolumenrate MVR (200°C/5kg) von 11 cm³/10 min und einem Zug-E-modul von 1550 MPa (Styrolux® 684 D der Fa. BASF) .

### Komponente P3-1)

Standard-Polystyrol mit einer Schmelzevolumenrate MVR (200°C/5kg) von 3 cm³/10 min und einem Zug-E-modul von 3300 MPa (Polystyrol 158 K der Fa. BASF)

### Komponente P3-2)

Standard-Polystyrol mit einer Schmelzevolumenrate MVR (200°C/5kg) von 2,5 cm³/10 min und einem Zug-E-modul von 3300 MPa (Polystyrol 165 H der Fa. BASF)

### Komponente P3-3)

Hochschlagfestes Polystyrol mit einer Schmelzevolumenrate MVR (200°C/5 kg) von 3 cm³/10 min und einem Zug-E-modul von 1800 MPa (Polystyrol 486 M der Fa. BASF)

### Herstellung der Formmassen:

Die Komponenten P1) bis P4) wurden in den in Tabelle 2 angegebenen Gewichtsanteilen in einem Zweischneckenextruder (ZSK 25 der Fa Werner & Pfleiderer) bei einer Temperatur von 200°C und einem Durchsatz von 10 kg/h aufgeschmolzen, homogenisiert und als Strang in ein Wasserbad extrudiert. Das getrocknete Granulat wurde anschließend zu Normprüfkörpern verspritzt.

Tabelle 2 und 3 zeigt die Eigenschaften der Polymermischungen an gepreßten bzw. gespritzten Probekörpern.

### Folienherstellung:

Die erfindungsgemäßen Folien sowie die zu Vergleichszwecken hergestellten Folien wurden nach dem "chill roll"-Verfahren auf einem Extruder hergestellt (Battenfeld; Schneckendurchmesser 45 mm, Schneckenlänge 25 D, Massetemperatur 214°C bei einer Walzentemperatur von 60°C).

Die Folien besaßen eine Dicke vor ca. 250 µm.

Die Zusammensetzungen der Folien und die Ergebnisse der Messungen sind den Tabellen 4 und 5 zu entnehmen.

### Meßmethoden:

Die Schmelze-Volumenrate MVR (200°C/S kg) wurde gemäß ISO 1133 bestimmt.

Die Probekörper für die mechanischen Prüfungen wurden bei 220°C Massetemperatur und 45°C Formtemperatur gespritzt. E-Modul, Streckspannung, Bruchspannung, Streckdehnung und Bruchdehnung wurden im Zugversuch nach ISO 527 mit Zugstäben gemäß ISO 3167 ermittelt.

Die Charpy-Schlagzähigkeit wurde nach ISO 179/1eU, Die Charpy-Kerbschlagzähigkeit wurde nach ISO 179/1eA an gespritzten Formkörpern mit den Abmessungen 80x10x4 mm geprüft.

Der Glanz wurde an 1,5 mm starken, gespritzten planaren Probekörpern bei 20°, 65° und 85° Einfallswinkel bestimmt, wobei 100 Skalenteile (SKT) Totalreflexion an einer Grenzfläche bedeuten. Werte über 100 Skalenteile bedeuten Reflexion sowohl an Ober- als auch Unterseite. Die Transparenz wurde relativ zueinander gegen Luft an einem 4 mm starken, gespritzten Formteil bestimmt.

Die Vicat-Erweichungstemperaturen VST/A und VST/B wurden nach der Prüfvorschrift DIN ISO 306 bestimmt.

Der Fallbolzentest erfolgce nach DIN 53 443.

Der Polybutadienanteil (PBu) wurde durch Wijs-Titration ermittelt.

Die Folien 1 bis 7 zeigen eine gute Transparenz. Die Folien 5 bis 7, die zusätzlich geringe Anteile an schlagzähem Polystyrol enthalten, zeichnen sich durch eine sehr gute Zähigkeit bei hervorragender Steifigkeit aus.

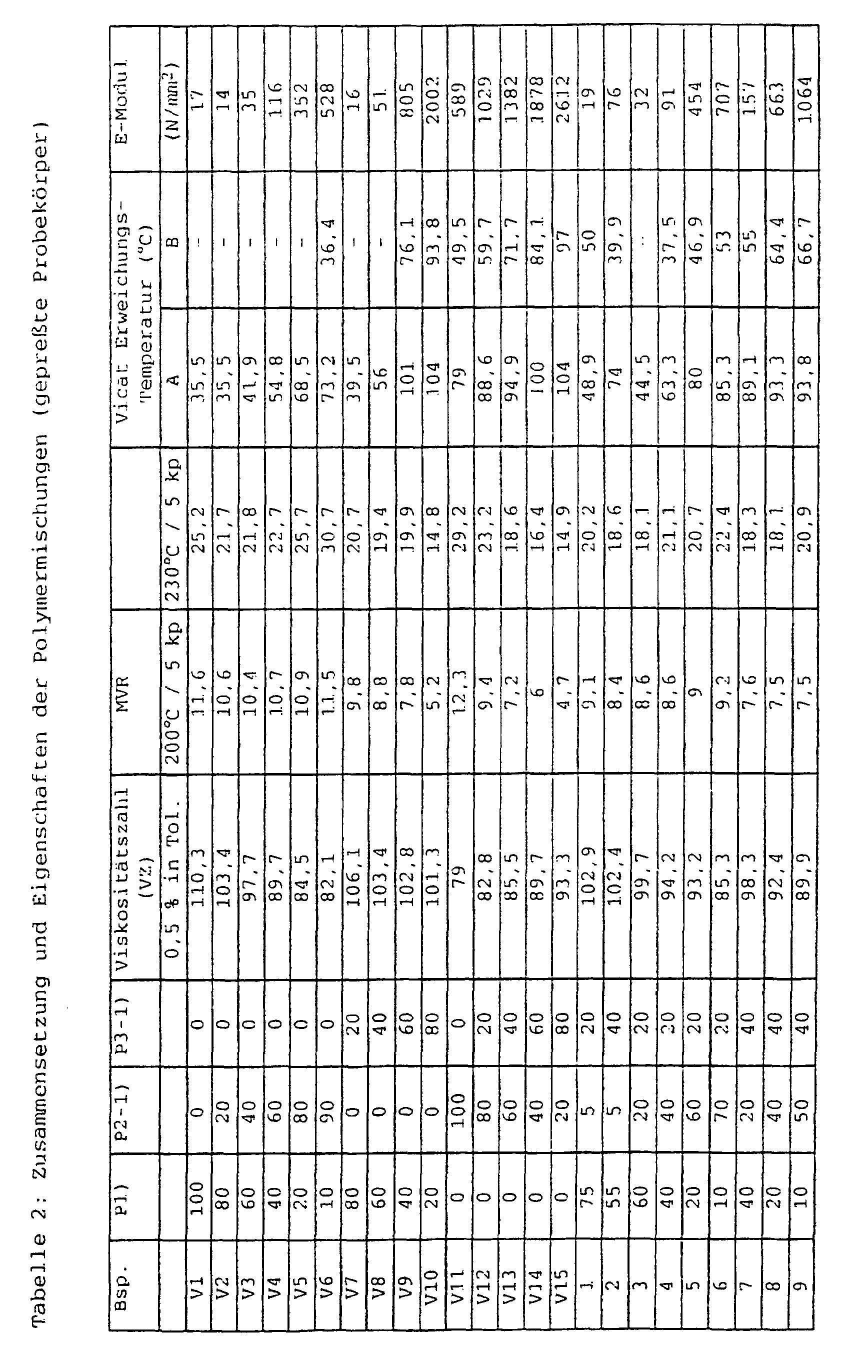

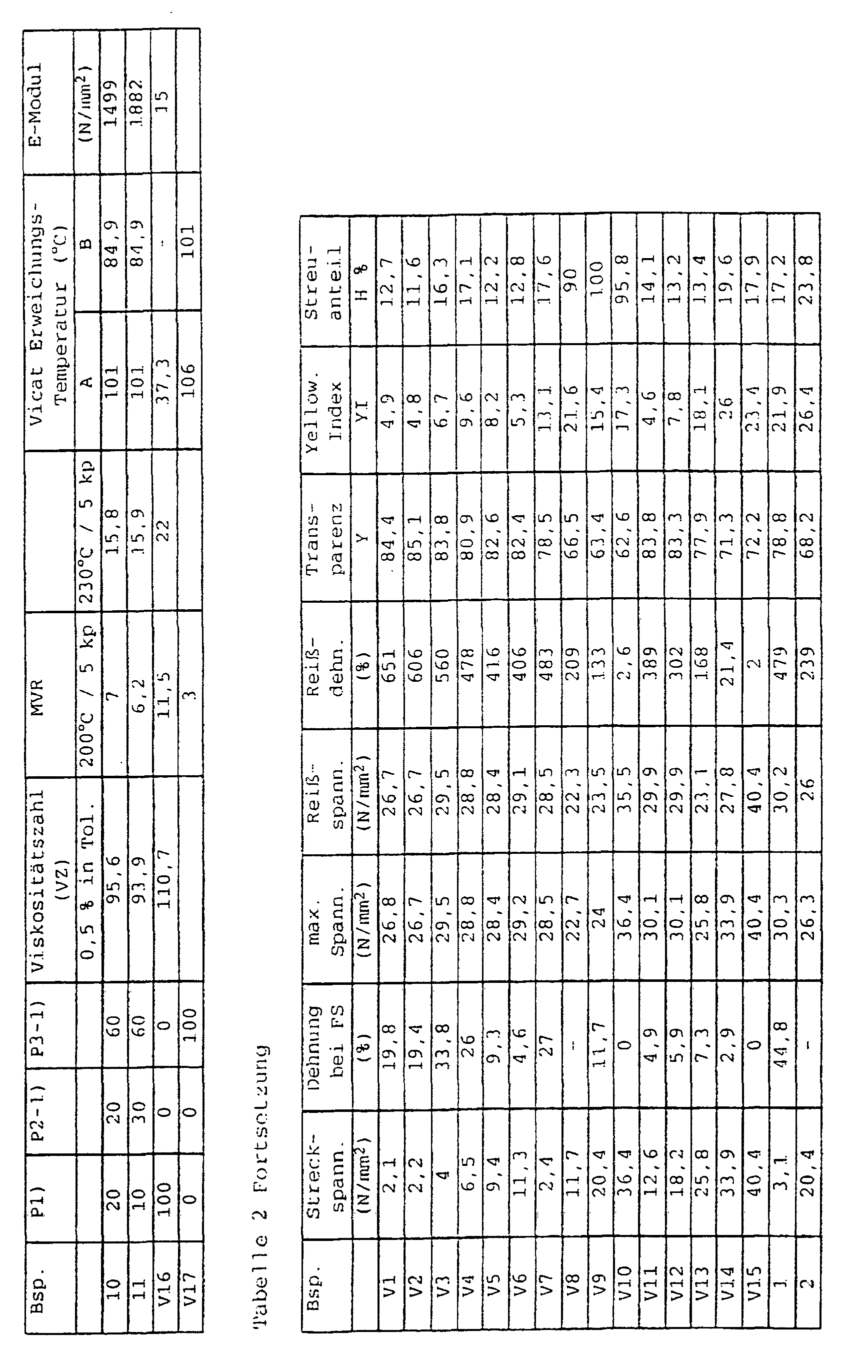

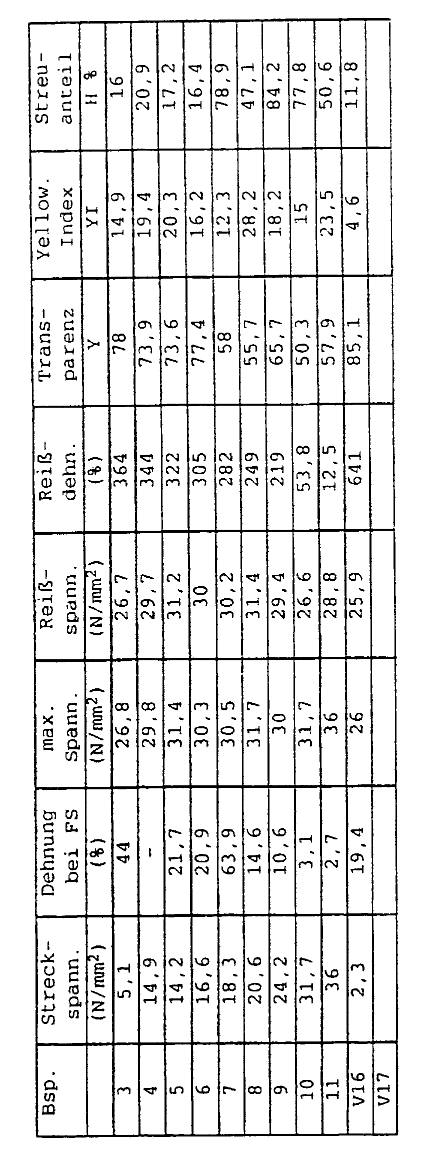

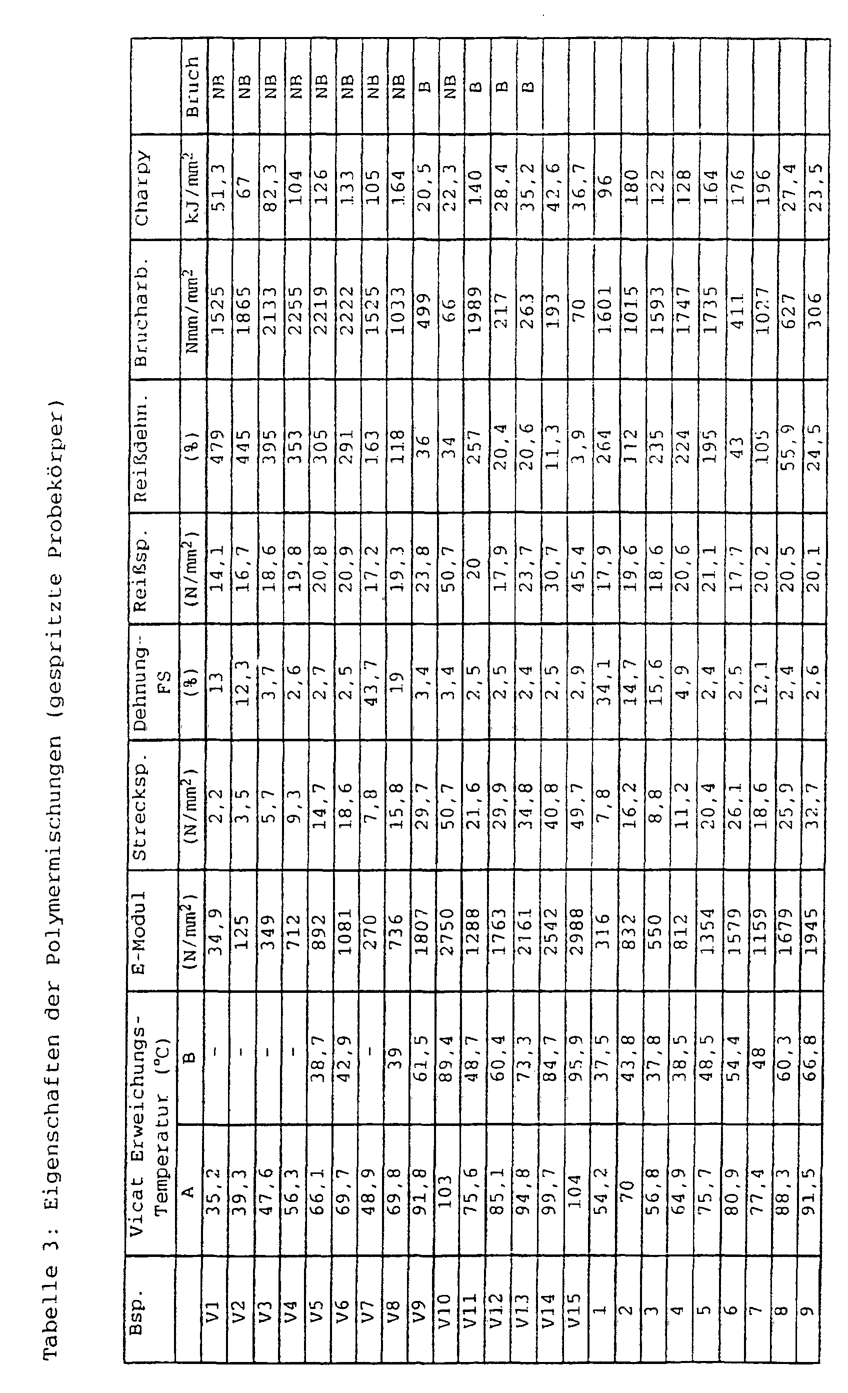

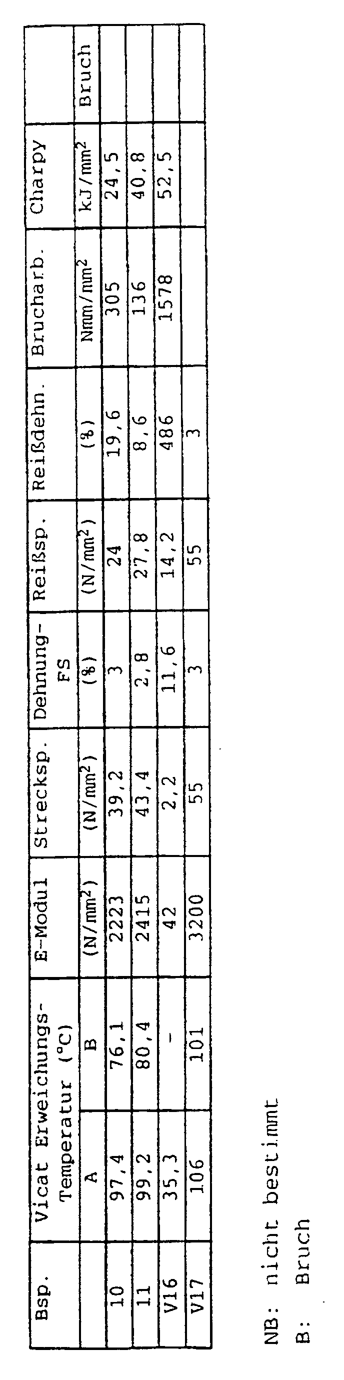

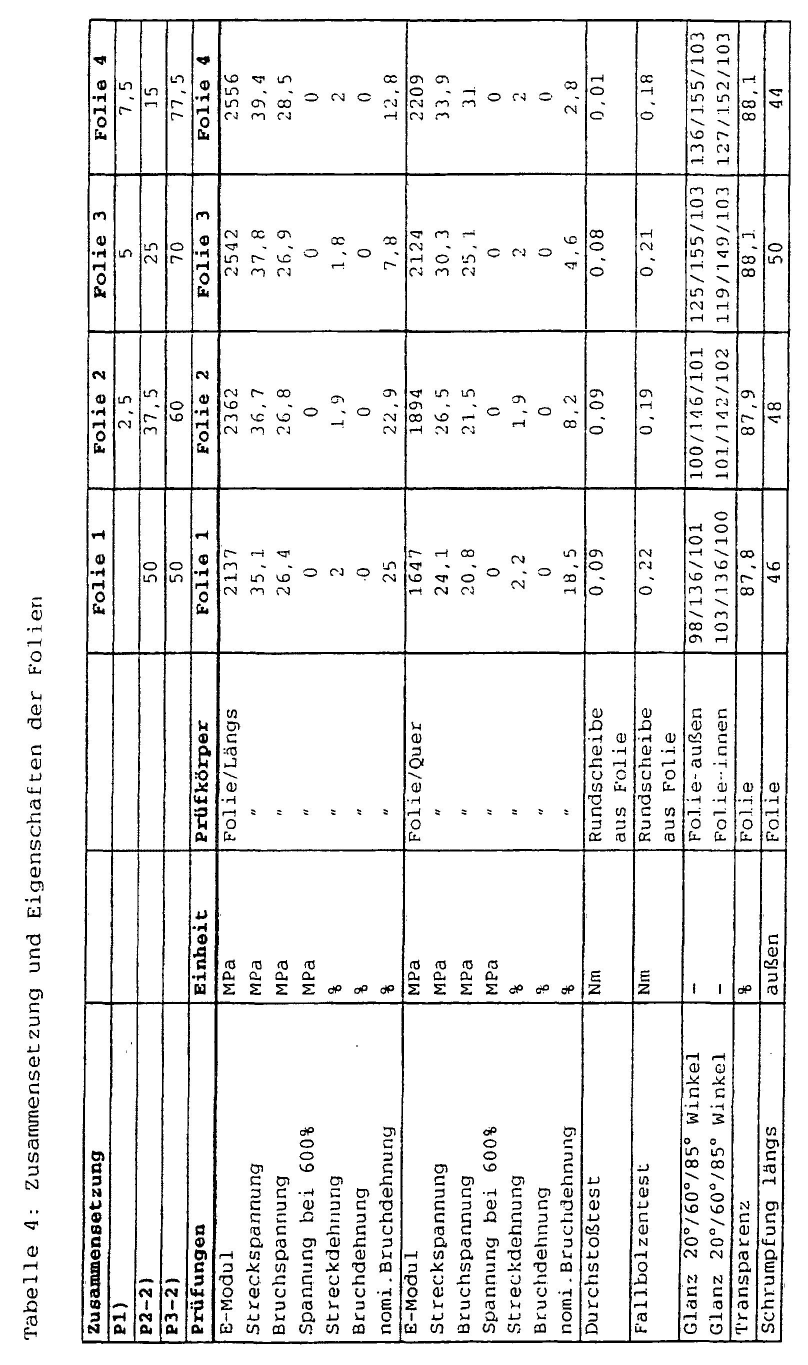

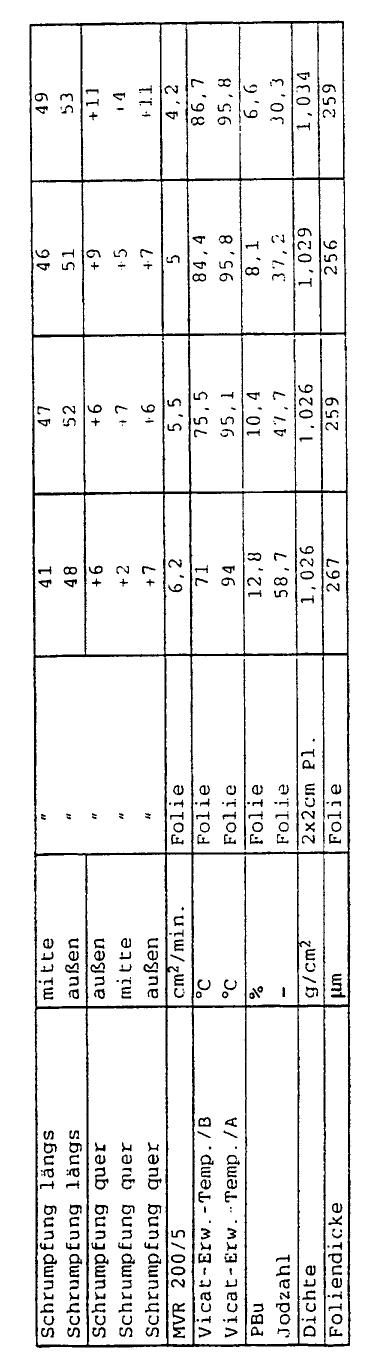

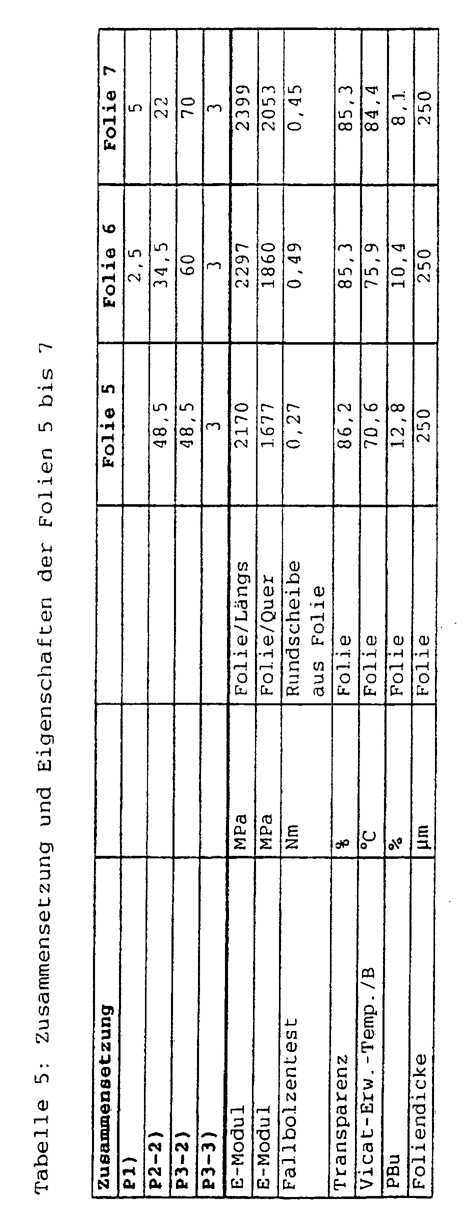

## Patentansprüche

1. Polymermischungen, enthaltend
P1) 1 - 85 Gew.-% eines gummielastischen Blockcopolymeren, das aus Hartblöcken S aus vinylaromatischen Monomeren und statistischen Weichblöcken B/S aus Dienen und vinylaromatischen Monomeren aufgebaut ist und mindestens die Blockstruktur S-3/S-S enthält, wobei der Diengehalt weniger als 50 Gewichtsprozent und der Anteil der aus den Blöcken B/S gebildeten Weichphase mindestens 60 Gewichtsprozent beträgt, jeweils bezogen auf das gesamte Blockcopolymer,
P2) 5 - 89 Gew.-% eines von P1) verschiedenen Blockcopolymeren aus vinylaromatischen Monomeren und Dienen,
P3) 10 - 94 Gew.-% glasklaren oder schlagzähen Polystyrols oder Mischungen davon und
P4) 0 - 84 Gew.-% weiterer Zusatzstoffe,
wobei die Summe der Komponenten P1) bis P4) 100% ergibt.

2. Polymermischung nach Anspruch 1, enthaltend
2 - 62 Gew.-% P1)
18 - 78 Gew.-% P2)
20 - 80 Gew.-% P3)
0 - 60 Gew.-% P4).

3. Polymermischung nach Anspruch 1, enthaltend
5 - 35 Gew.-% P1)
25 - 55 Gew.-% P2)
40 - 70 Gew.-% P3)
0 - 30 Gew.-% P4).

4. Polymermischungen nach den Ansprüchen 1 bis 3, **dadurch gekennzeichnet, daß** man als Blockcopolymer P2) ein Blockcopolymer mit einer Reißdehnung größer 100 % und einem E-Modul größer 100 MPa verwendet.

5. Polymermischungen nach den Ansprüchen 1 bis 4, **dadurch gekennzeichnet, daß** man als Blockcopolymer P2) ein nicht elastomeres, sternförmig verzweigtes Blockcopolymer aus 60 bis 95 Gew.-% eines vinylaromatischen Monomeren und 40 bis 5 Gew.-% eines konjugierten Dienes verwendet.

6. Polymermischungen nach den Ansprüchen 1 bis 5, **dadurch gekennzeichnet, daß** man als Blockcopolymer P2) ein Blockcopolymer mit entständigen Hartblöcken S aus vinylaromatischen Monomeren verwendet.

7. Verwendung der Polymermischungen nach den Ansprüchen 1 bis 6 zur Herstellung von Fasern, Folien und Formkörpern.

8. Fasern, Folien und Formkörpern erhältlich aus den Polymermischungen nach den Ansprüchen 1 bis 6.

## Claims

1. A polymer mixture comprising
P1) from 1 to 85% by weight of an elastomeric block copolymer which has been built up from hard blocks S made from vinylaromatic monomers and from random soft blocks B/S made up from dienes and from vinylaromatic monomers, and which contains at least the block structure S-B/S-S, where the diene content is less than 50 percent by weight and the proportion of the soft phase formed from the blocks B/S is at least 60 percent by weight, based in each case on the entire block copolymer,
P2) from 5 to 89% by weight of a block copolymer differing from P1) and made from vinylaromatic monomers and from dienes,
P3) from 10 to 94% by weight of glass-clear or impact-modified polystyrene or mixtures thereof, and
P4) from 0 to 84% by weight of other additives,
where the total of components P1) to P4) is 100%.

2. A polymer mixture as claimed in claim 1 comprising
from 2 to 62% by weight of P1),
from 18 to 78% by weight of P2),
from 20 to 80% by weight of P3), and
from 0 to 60% by weight of P4).

3. A polymer mixture as claimed in claim 1 comprising
from 5 to 35% by weight of P1),
from 25 to 55% by weight of P2),
from 40 to 70% by weight of P3), and
from 0 to 30% by weight of P4).

4. A polymer mixture as claimed in any of claims 1 to 3, wherein the block copolymer P2) used is a block copolymer with an elongation at break of greater than 100% and a modulus of elasticity of greater than 100 MPa.

5. A polymer mixture as claimed in any of claims 1 to 4, wherein the block copolymer P2) used is a non-elastomeric, star-shaped branched block copolymer made from from 60 to 95% by weight of a vinylaromatic monomer and from 40 to 5% by weight of a conjugated diene.

6. A polymer mixture as claimed in any of claims 1 to 5, wherein the block copolymer P2) used is a block copolymer with terminal hard blocks S made from vinylaromatic monomers.

7. The use of the polymer mixtures as claimed in any of claims 1 to 6 for producing fibers, films or moldings.

8. A fiber, a film or a molding obtainable from the polymer mixtures as claimed in any of claims 1 to 6.

## Revendications

1. Mélanges polymères, contenant
P1) 1-85% en poids d'un copolymère bloc élastique comme du caoutchouc, qui est constitué de blocs durs S à base de monomères vinylaromatiques et de blocs mous statistiques B/S à base de diènes et de monomères vinylaromatiques et qui contient au moins la structure de blocs S-B/S-S, la teneur en diènes étant inférieure à 50% en poids et la fraction de la phase molle formée de blocs B/S étant d'au moins 60% en poids, chaque fois par rapport au copolymère bloc entier,
P2) 5-89% en poids d'un copolymère bloc différent de P1), à base de monomères vinylaromatiques et de diènes,
P3) 10-94% en poids d'un polystyrène limpide ou résistant au choc ou de mélanges de ceux-ci, et
P4) 0-84% en poids d'autres additifs,
la somme des composants P1) à P4) donnant 100%.

2. Mélanges polymères suivant la revendication 1, contenant
2-62% en poids de P1),
18-78% en poids de P2),
20-80% en poids de P3),
0-60% en poids de P4).

3. Mélanges polymères suivant la revendication 1, contenant
5-35% en poids de P1),
25-55% en poids de P2),
40-70% en poids de P3),
0-30% en poids de P4).

4. Mélanges polymères suivant l'une des revendications 1 à 3, **caractérisés en ce que**, comme copolymère bloc P2), on utilise un copolymère bloc ayant un allongement à la rupture supérieur à 100% et un coefficient d'élasticité supérieur à 100 MPa.

5. Mélanges polymères suivant l'une des revendications 1 à 4, **caractérisés en ce que**, comme copolymère bloc P2), on utilise un copolymère bloc ramifié en étoile, non élastomère, à base de 60 à 95% en poids d'un monomère vinylaromatique et de 40 à 5% en poids d'un diène conjugué.

6. Mélanges polymères suivant l'une des revendications 1 à 5, **caractérisés en ce que**, comme copolymère bloc P2), on utilise un copolymère bloc présentant des blocs durs terminaux S à base de monomères vinylaromatiques.

7. Utilisation des mélanges polymères suivant l'une des revendications 1 à 6, pour la fabrication de fibres, de feuilles et de corps façonnés.

8. Fibres, feuilles et corps façonnés que l'on peut obtenir à partir des mélanges polymères suivant l'une des revendications 1 à 6.
